(19) Europäisches Patentamt
European Patent Office
Office européen des brevets

(11) **EP 4 417 291 A1**

(12) **EUROPEAN PATENT APPLICATION**
published in accordance with Art. 153(4) EPC

(43) Date of publication:
**21.08.2024 Bulletin 2024/34**

(21) Application number: **22880660.0**

(22) Date of filing: **05.09.2022**

(51) International Patent Classification (IPC):
**B01D 39/20** (2006.01) **B01D 46/10** (2006.01)
**D06M 13/02** (2006.01)

(52) Cooperative Patent Classification (CPC):
**B01D 39/20; B01D 46/10; D06M 13/02**

(86) International application number:
**PCT/JP2022/033211**

(87) International publication number:
**WO 2023/062964 (20.04.2023 Gazette 2023/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2021 JP 2021169867**

(71) Applicant: **Hokuetsu Corporation**
**Nagaoka-shi**
**Niigata 940-0027 (JP)**

(72) Inventors:
• **TASHIRO, Nozomi**
**Nagaoka-shi, Niigata 940-0027 (JP)**
• **SATO, Masashi**
**Nagaoka-shi, Niigata 940-0027 (JP)**

(74) Representative: **v. Bezold & Partner Patentanwälte - PartG mbB**
**Ridlerstraße 57**
**80339 München (DE)**

(54) **FILTER MEDIUM FOR HIGH-PERFORMANCE AIR FILTER, AND METHOD FOR MANUFACTURING SAME**

(57) An object of the present disclosure is to provide a filter medium for an air filter which does not contain a PFAS nor a siloxane compound and has a high PF value and high water repellency. A filter medium for an air filter according to the present disclosure is a filter medium for an air filter composed of a wet-laid nonwoven fabric containing a glass fiber having a fiber diameter of less than 1 um, wherein the wet-laid nonwoven fabric contains a water repellent containing, as a main component, a hydrocarbon-based polymer free of fluorine and silicon in a molecule thereof, and does not contain a binder resin.

EP 4 417 291 A1

**Description**

Technical Field

The present disclosure relates to a filter medium for an air filter used for an air filter installed in a clean room for a semiconductor, a liquid crystal, and food industry, a building air conditioner, an air purifier, and the like.

Background Art

In order to collect and remove particles of submicron or micron order in the air, an air filter including a filter medium for an air filter is generally used. The air filter is classified into a coarse dust filter, a medium performance filter, a HEPA filter, an ULPA filter, and others in proportion to the size of particles that can be collected and the collection efficiency thereof. The latter filters can collect particles having a smaller particle size and have higher collection efficiency.

The filter medium for an air filter requires having necessary particle collection efficiency and having a low pressure loss so as not to increase blowing energy. As an index value of the collection efficiency and the pressure loss, there is a PF value shown in Mathematical Formula 1, and the higher this value is, the higher the collection efficiency is and the lower the pressure loss is, which indicates that the filter medium is excellent.

[Mathematical Formula 1]

$$PF\ value = \frac{\log_{10}(Permeability[\%]/100)}{Pressure\ loss[Pa]/9.81} \times (-100)$$

Here, permeability [%] = 100 - collection efficiency [%]

Further, as a physical property required for the filter medium for an air filter, there is water repellency. Sufficient water repellency can prevent the occurrence of a problem of water droplets blocking pores of the filter medium when dew condensation due to a change in air temperature occurs or air with high humidity flows therethrough. In addition, in a place close to the sea, it can prevent a deliquescence phenomenon, in which sea salt particles collected by the filter medium are liquefied by moisture in the air and flow out. Meanwhile, when water repellency is low, there is a problem that a sealant, a hot melt or the like, used in processing the filter medium into an air filter unit, permeates.

In order to impart water repellency to a filter medium, a method of adhering a fluorine-based water repellent and/or a silicone-based water repellent (see, for example, PTL 1 or PTL 2.) is widely used.

Examples of the filter medium using a water repellent other than fluorine-based and silicone-based water repellents include a method using synthetic paraffin (see, for example, PTL 3.) and a method using an alkyl ketene dimer (see, for example, PTL 4.).

Further, the filter medium for an air filter requires having sufficient strength so that cracking or rupture does not occur in processing and during ventilation use. In order to impart strength to a filter medium for an air filter, a method of adhering a binder resin is widely used, but there has been a problem that a binder film formed by adhering a binder resin blocks pores of the filter medium, resulting in an increase in pressure loss, and, moreover, covers the surface of a fine diameter fiber contributing to collection of particles, resulting in a deterioration in collection efficiency.

Examples of the method for imparting strength to a filter medium for an air filter, without using a binder resin, include a method using a binder fiber (see, for example, PTL 5 or PTL 6.).

Citation List

Patent Literature

PTL 1: JP H2-175997 A
PTL 2: JP H9-225226 A
PTL 3: WO 97/04851 A
PTL 4: WO 02/016005 A
PTL 5: JP 2008-518772 A
PTL 6: JP 2018-38983 A

Summary of Invention

Technical Problem

However, in the technique disclosed in PTL 1 or PTL 2, since a perfluoroalkyl compound (hereinafter abbreviated as PFAS) contained in the fluorine-based water repellent is hardly decomposed and has high bioaccumulation, there is a movement to regulate the use thereof worldwide. In addition, a siloxane compound and a cyclic siloxane, which is a condensate thereof, contained in the silicone-based water repellent have a problem of adhering to the surface of a semiconductor substrate or a glass substrate to cause a decrease in product yield or occurrence of cissing. Further, there is a movement to regulate the use of a cyclic siloxane because it is hardly decomposed and has high bioaccumulation like a PFAS.

In addition, in the technique disclosed in PTL 3 or PTL 4, it has been difficult to achieve a physical property balance between the PF value and the water repellency of the filter medium in both methods.

As described above, a filter medium for an air filter which does not contain a PFAS nor a siloxane compound is required, but in the conventional technique, it has been difficult to obtain a filter medium having both a high PF value and high water repellency. Therefore, an object of the present disclosure is to provide a filter medium for an air filter which does not contain a PFAS nor a siloxane compound and has a high PF value and high water repellency.

Solution to Problem

The present inventors have intensively conducted studies for achieving the above-mentioned object, and resultantly found that a filter medium for an air filter having a high PF value and high water repellency can be unexpectedly obtained by incorporating a water repellent containing, as a main component, a hydrocarbon-based polymer free of fluorine and silicon in a molecule thereof and by incorporating no binder resins in a wet-laid nonwoven fabric containing a glass fiber having a fiber diameter of less than 1 $\mu$m, and completed the present invention. That is, a filter medium for an air filter according to the present invention is a filter medium for an air filter composed of a wet-laid nonwoven fabric containing a glass fiber having a fiber diameter of less than 1 um, wherein the wet-laid nonwoven fabric contains a water repellent containing, as a main component, a hydrocarbon-based polymer free of fluorine and silicon in a molecule thereof, and does not contain a binder resin.

The filter medium for an air filter according to the present invention includes an embodiment in which the wet-laid nonwoven fabric further contains a binder fiber. According to such a structure, a filter medium for an air filter having higher strength can be obtained.

In the filter medium for an air filter according to the present invention, a blending ratio of the binder fiber is preferably 10 to 70% by mass with respect to a total fiber mass of the fibers in the filter medium. The PF value can be increased while the strength of the filter medium is ensured.

The filter medium for an air filter according to the present invention includes an embodiment in which the wet-laid nonwoven fabric is reinforced with a reinforcing material. When necessary, the strength of the filter medium can be further increased.

The filter medium for an air filter according to the present invention includes an embodiment in which the wet-laid nonwoven fabric does not contain a binder fiber, and the wet-laid nonwoven fabric is reinforced with a reinforcing material. When a binder fiber is not contained, the strength of the wet-laid nonwoven fabric itself may not be sufficient, but a high PF value and high strength can be ensured by reinforcing the wet-laid nonwoven fabric with a reinforcing material.

In the filter medium for an air filter according to the present invention, it is preferable that the wet-laid nonwoven fabric contains a glass wool fiber having an average fiber diameter of less than 1 um and a glass wool fiber having an average fiber diameter of 1 um or more, and a blending ratio of the glass wool fiber having the average fiber diameter of less than 1 um is higher than a blending ratio of the glass wool fiber having the average fiber diameter of 1 um or more. The filter medium can be given a high surface area that contributes to collection of particles.

In the filter medium for an air filter according to the present invention, the hydrocarbon-based polymer is preferably an acrylic polymer. According to such a structure, a filter medium for an air filter having higher water repellency can be obtained.

In the filter medium for an air filter according to the present invention, the wet-laid nonwoven fabric preferably further contains a surfactant. According to such a structure, a filter medium for an air filter having a higher PF value can be obtained.

In the filter medium for an air filter according to the present invention, a solid mass ratio between the water repellent and the surfactant (water repellent/surfactant) is preferably 2 to 70 parts by mass with respect to 100 parts by mass of the water repellent. A filter medium having a good physical property balance between the PF value and the water repellency can be obtained.

A method for producing a filter medium for an air filter according to the present invention includes a step of forming a sheet in a wet state by forming a slurry containing a glass fiber having a fiber diameter of less than 1 um into the sheet by a wet papermaking method, a step of impregnating the sheet in a wet state with an aqueous dispersion that contains a water repellent containing, as a main component, a hydrocarbon-based polymer free of fluorine and silicon in a molecule thereof and that does not contain a binder resin, and a step of obtaining a dry sheet by drying the sheet in a wet state impregnated with the aqueous dispersion. According to this production method, it is practical to obtain a filter medium for an air filter which does not contain a PFAS nor a siloxane compound and has a good physical property balance between the PF value and the water repellency.

In the method for producing a filter medium for an air filter according to the present invention, the slurry preferably further contains a binder fiber. According to such a production method, a filter medium for an air filter having higher strength can be obtained.

In the method for producing a filter medium for an air filter according to the present invention, the hydrocarbon-based polymer is preferably an acrylic polymer. According to such a production method, a filter medium for an air filter having higher water repellency can be obtained.

In the method for producing a filter medium for an air filter according to the present invention, the aqueous dispersion preferably further contains a surfactant. According to such a production method, a filter medium for an air filter having a higher PF value can be obtained.

Advantageous Effects of Invention

According to the present disclosure, it is practical to obtain a filter medium for an air filter which does not contain a PFAS nor a siloxane compound and has a high PF value and high water repellency.

Description of Embodiments

Next, the present invention will be described in detail with reference to embodiments, but the present invention is not construed as being limited to these descriptions. The embodiments may be variously modified as long as the effect of the present invention is exhibited.

The filter medium for an air filter according to the present embodiment is composed of a wet-laid nonwoven fabric containing a glass fiber. Since a glass fiber has high stiffness, in the filter medium, voids required for air to pass therethrough can be sufficiently maintained, and a high PF value can be obtained. As the glass fiber, a glass wool fiber and a chopped glass fiber can be used. The glass wool fiber as used herein is an amorphous and discontinuous wool-like glass fiber that has a fiber diameter with a certain distribution width, and that is produced by stretching through a flame stretching method or a rotary method. The range of the fiber diameter is generally about 0.1 to about 10 um, and has a certain distribution width, and therefore, the value of the fiber diameter is generally expressed as an average fiber diameter, and the fiber diameter of the glass wool fiber used in the present embodiment is also an average fiber diameter. Meanwhile, the chopped glass fiber is a regular linear glass fiber obtained by cutting a continuous glass fiber, spun from a spinneret having a predetermined diameter, to a predetermined fiber length, and has the fiber diameter that is generally in a range of about 4 to about 30 um, and the fiber length that is generally in a range of about 1.5 to about 25 mm. In the filter medium of the present embodiment, an amorphous glass wool fiber having a fine fiber diameter has an effect of increasing the collection efficiency and maintaining voids in the filter medium. The linear chopped glass fiber having a thick fiber diameter has an effect of imparting strength and stiffness required in processing and during use of the filter unit, but the fiber is easily deposited in the horizontal direction during production of the filter medium, and therefore the high blending ratio of the chopped glass fiber tends to heighten the density of the filter medium.

The wet-laid nonwoven fabric at least partially contains a glass fiber having a fiber diameter of less than 1 um (hereinafter referred to as a submicron glass fiber). This is made of a glass wool fiber. The reason for containing the submicron glass fiber is that it has a high surface area contributing to collection of particles. In the present embodiment, the blending ratio of the glass wool fiber containing the submicron glass fiber is preferably 5 to 90% by mass, more preferably 25 to 80% by mass, and still more preferably 45 to 70% by mass, with respect to the total fiber mass in the filter medium. In the present embodiment, the blending ratio of the submicron glass fiber is preferably 5 to 85% by mass, more preferably 20 to 75% by mass, and still more preferably 30 to 65% by mass, with respect to the total fiber mass in the filter medium. Further, the blending ratio of the chopped glass fiber is preferably 1 to 50% by mass, more preferably 3 to 30% by mass, and still more preferably 5 to 10% by mass, with respect to the total fiber mass in the filter medium.

In the filter medium for an air filter according to the present embodiment, it is preferable that the wet-laid nonwoven fabric contains a glass wool fiber having an average fiber diameter of less than 1 um and a glass wool fiber having an average fiber diameter of 1 um or more, and the blending ratio of the glass wool fiber having the average fiber diameter of less than 1 um is higher than the blending ratio of the glass wool fiber having the average fiber diameter of 1 um or more. The filter medium can be given a high surface area that contributes to collection of particles. The blending ratio of the glass wool fiber having the average fiber diameter of less than 1 um is preferably 1.2 times to 10 times higher, and more preferably 2.0 times to 8.4 times higher than the blending ratio of the glass wool fiber having an average fiber diameter of 1 um or more.

The wet-laid nonwoven fabric preferably contains a binder fiber. By virtue of adding a binder fiber, strength can be imparted by weld adhesion, hydrogen bonding, physical entanglement, or the like. The weld adhesion includes an embodiment in which a binder fiber is spot-adhered to glass wool. Examples of the binder fiber include a polyvinyl alcohol fiber, a polyester fiber, and a polyolefin fiber. In the present embodiment, it is preferable to use a melt adhesive binder fiber among these. Examples of the form of the melt adhesive binder fiber include a side-by-side type binder fiber in which a part to be melted and a part to remain unmelted are combined side by side, a core-sheath type binder fiber having a core part to remain unmelted and a sheath part to be melted, and an all-melting type binder fiber that is to be entirely melted and contributes to adhesion between main fibers such as glass fibers. The blending ratio of the binder fiber is preferably 10 to 70% by mass, more preferably 20 to 60% by mass, and still more preferably 30 to 50% by mass, with respect to the total fiber mass of the fibers in the filter medium. The PF value can be increased while the strength of the filter medium is ensured. The melt adhesive binder fiber may have a form in which any one of the side-by-side type binder fiber, the core-sheath type binder fiber, and the all-melting type binder fiber is incorporated in the wet-laid nonwoven fabric, or two or three types thereof may be incorporated therein. Examples of incorporating two types include a combination of the side-by-side type binder fiber and the core-sheath type binder fiber, a combination of the side-by-side type binder fiber and the all-melting type binder fiber, and a combination of the core-sheath type binder fiber and the all-melting type binder fiber.

When the sheet is in a wet state, the melt adhesive binder fiber retains the shape from the time of blending, but when the binder fiber is heated in a heating and drying step, part or all thereof is melted, and the melt adhesive binder fiber is bonded to the main fiber or the binder fibers are bonded to each other. In the molten binder fiber contained in the filter medium for an air filter subjected to the heating and drying step, the shape of the fiber is retained, or the shape of the fiber can be observed although there is a discontinuous part, where only a dot or line shape is observed. More specifically, when the all-melting type binder fiber is heated, all is melted and bonded to the glass fiber or all-melting binder fibers are bonded to each other. In the molten all-melting binder fiber, there may be a deformed part such as discontinuation, crushing, or bending, but the shape of the fiber can be observed, and only a linear or dotted shape is observed. In the present embodiment, since there is only a difference in that the all-melting binder fiber has a trace of being fibrous in comparison with being fibrous before and after the heating and drying step, the all-melting binder fiber before melting and the molten all-melting binder fiber are each referred to as an all-melting binder fiber. Further, when the side-by-side type binder fiber or the core-sheath type binder fiber is heated, the part to be melted of the side-by-side type binder fiber or the sheath part of the core-sheath type binder fiber is melted and bonded to the glass fiber, the side-by-side type binder fibers are bonded to each other, or the core-sheath binder fibers are bonded to each other. In the molten side-by-side type binder fiber or the molten core-sheath binder fiber, the part to remain unmelted of the side-by-side type binder fiber or the core part of the core-sheath binder fiber retains the shape of the fiber. In the present embodiment, since the side-by-side type binder fiber or the core-sheath type binder fiber is fibrous both before and after the heating and drying step, the side-by-side type binder fiber or the core-sheath type binder fiber before melting and the molten side-by-side type binder fiber or the molten core-sheath type binder fiber are both referred to as "side-by-side type binder fiber or core-sheath type binder fiber". When the binder resin is heated by the heating and drying step or the like, the binder resin is melted or emulsion particles are fused to each other to form a film, and the film spreads over the entire filter medium and is distributed in a planar shape.

In the present embodiment, fibers other than the binder fiber and the glass fiber may be used as fibers contained in the wet-laid nonwoven fabric. Examples of these fibers include natural fibers such as wood pulp, regenerated fibers such as a rayon fiber, and synthetic fibers such as a polyolefin fiber, a polyurethane fiber, and a vinylon fiber. The blending amount of these fibers is preferably set within a range where the effect of increasing the PF value of the glass fiber is not impaired. For example, the blending amount is 30% by mass or less, more preferably 20% by mass or less, and still more preferably 10% by mass or less of the entire fibers.

The present embodiment includes an embodiment in which the wet-laid nonwoven fabric is reinforced with a reinforcing material as long as the effect of the present invention is not impaired. For example, the wet-laid nonwoven fabric to serve as the filter medium for an air filter and another nonwoven fabric may be bonded. The wet-laid nonwoven fabric to serve as the filter medium for an air filter and another nonwoven fabric may be fused. By bonding or fusing to another nonwoven fabric, the strength can be further increased. The other nonwoven fabric is, for example, a polyester nonwoven fabric, a polyolefin nonwoven fabric, or the like. Even when the wet-laid nonwoven fabric contains the binder fiber, an embodiment in which the wet-laid nonwoven fabric is reinforced with a reinforcing material may be adopted. When necessary, the strength of the filter medium can be further increased. In addition, when the wet-laid nonwoven fabric does not contain the binder fiber, the wet-laid nonwoven fabric is preferably reinforced with a reinforcing material. When the binder fiber is not contained in the wet-laid nonwoven fabric, the strength of the wet-laid nonwoven fabric itself may not be sufficient, but a high PF value and high strength can be ensured by reinforcing the wet-laid nonwoven fabric with a reinforcing material. In the present description, when a proportion such as a content in the filter medium is indicated, calculation is performed based on the wet-laid nonwoven fabric without including other nonwoven fabrics.

The water repellent is used for imparting water repellency required for the filter medium for an air filter by adhering to the fiber of the wet-laid nonwoven fabric. The main component of the water repellent contains a hydrocarbon-based polymer free of fluorine and silicon in a molecule thereof. The water repellent contains a hydrocarbon-based polymer free of fluorine and silicon in a molecule thereof in an amount of 50% by mass or more, preferably 80% by mass or more, and more preferably 90% by mass or more. The hydrocarbon-based polymer is a polymer containing an organic compound having a hydrocarbon as a skeleton. The organic compound contained in the polymer may contain or need not contain oxygen, nitrogen, or the like. Among the hydrocarbon-based polymers, an acrylic polymer is more preferable. The acrylic polymer is a polymer obtained by polymerizing an acrylic acid ester or a methacrylic acid ester as a main raw material monomer. The acrylic polymer is synthesized with the raw material monomer incorporated in an amount of 50% by mass or more, preferably 80% by mass or more, and more preferably 90% by mass or more. The ester moiety of the acrylic polymer is preferably a hydrocarbon group. This hydrocarbon group may be linear or branched, and may be a saturated hydrocarbon or an unsaturated hydrocarbon, and further may have an alicyclic or aromatic ring. Among them, a linear group is preferable, and a linear alkyl group is more preferable. The number of carbon atoms in the ester moiety is preferably 9 or more, and more preferably 12 or more. When the number of carbon atoms is 8 or less, sufficient water repellency as a water repellent treatment agent cannot be exhibited. Further, the ionicity of the hydrocarbon-based water repellent is preferably cationic. Since the surface of the glass fiber is negatively charged, the water repellent is easily adsorbed onto the fiber surface, and higher water repellency can be obtained. Examples of such a hydrocarbon-based water repellent include Unidyne XF series (manufactured by Daikin Industries, Ltd.) made of an acrylic polymer, and MEISHIELD series (manufactured by Meisei Chemical Works, Ltd.) made of a hydrocarbon-based polymer, and the water repellent may be selected from these commercially available products.

The filter medium for an air filter according to the present embodiment does not contain a binder resin. This is because on one hand the binder resin imparts strength to the filter medium for an air filter; on the other hand the formed film blocks pores of the filter medium for an air filter to lower the PF value. The binder resin is a watersoluble resin or an aqueous emulsion and is distinguished from the binder fiber in this respect. Examples of a resin mainly used as the binder resin include a poly(meth)acrylic acid ester resin, a polyvinyl acetate resin, a polyurethane resin, and polyvinyl alcohol. Among them, the binder resin made of a poly(meth)acrylic acid ester resin is characterized in that a portion having 8 or less carbon atoms in the ester moiety is mainly contained (preferably 80% by mass or more, more preferably 90% by mass or more of the acrylic acid ester or the methacrylic acid ester). Meanwhile, the water repellent made of an acrylic polymer is characterized in that a portion having more than 8 carbon atoms is mainly contained (preferably 80% by mass or more, more preferably 90% by mass or more of the acrylic acid ester or the methacrylic acid ester), and the binder resin and the water repellent are distinguished from each other in this respect.

The surfactant according to the present embodiment is used for reducing the density of the filter medium for an air filter and improving the PF value. Since the water repellency is reduced by addition of the surfactant, it is preferable that the surfactant is cationic or nonionic, which makes a small contribution to the reduction of water repellency. Examples of the surfactant include primary to tertiary amine salts, a quaternary ammonium salt, a fatty acid ester, and an aliphatic ether.

In the present embodiment, the solid mass ratio between the water repellent and the surfactant (water repellent/surfactant) is preferably 2 to 70 parts of the surfactant with respect to 100 parts of the water repellent. It is preferably 5 to 60 parts, and more preferably 10 to 50 parts. With this ratio, a filter medium having a good physical property balance between the PF value and the water repellency can be obtained. When the mass ratio of the surfactant is less than 2 parts, it is difficult to contribute to an increase in the PF value. When the mass ratio of the surfactant is more than 70 parts, sufficient water repellency may not be obtained.

In the present embodiment, the solid mass content of the water repellent in the filter medium is preferably 0.1 to 5% with respect to the entire filter medium. It is more preferably 0.2 to 3%. When the content of such a component is less than 0.1%, sufficient water repellency may not be obtained. Meanwhile, when the content is more than 5%, a sufficient PF value may not be obtained.

In the present embodiment, the water repellent is provided as an aqueous dispersion by impregnation into the wet-laid nonwoven fabric in a wet state, and is then dried by heating. When a surfactant is added to the wet-laid nonwoven fabric, the surfactant is preferably added to an aqueous dispersion containing the water repellent. As a heating method under these circumstances, a multi-cylinder dryer, a Yankee dryer, a hot air dryer, or the like is used in a paper machine, and a rotary dryer, a circulation dryer, or the like is used in a hand paper machine. The heating temperature is 80 to 150°C, and more preferably 100 to 140°C.

In the present embodiment, an additive such as a crosslinking agent or an antifoaming agent can be appropriately added to the aqueous dispersion used for impregnation as long as the effect of the present invention is not impaired.

In a step of producing the filter medium for an air filter according to the present embodiment, a raw material fiber is dispersed in water to obtain a raw material slurry, and the raw material slurry is formed into a sheet by a wet papermaking method to obtain the sheet in a wet state. When the glass fiber is used in a large amount as the raw material fiber, water used for dispersion and papermaking is preferably acidic, and more preferably has a pH of 2 to 4. By performing dispersion and papermaking under acidic conditions, the glass fibers are easily adhered to each other, and strength can be increased.

Examples

Hereinafter, the present invention will be described with reference to specific examples, but the present invention is not limited to these descriptions. Note that the unit "part(s)" in examples indicates a solid mass ratio of a fiber in a raw material slurry or a solid mass ratio of a component in an impregnation liquid, and the total amount of all fibers is taken as 100 parts in the raw material slurry and the amount of the binder resin is taken as 100 parts in the impregnation liquid. Further, in the examples, "%" indicates the solid mass content of a component in the filter medium.

<Example 1>

In a table disintegrator, 60 parts of a glass wool fiber having an average fiber diameter of 0.65 um (B-06-F, manufactured by Unifrax Co.), 30 parts of a glass wool fiber having an average fiber diameter of 2.44 um (B-26-R, manufactured by Unifrax Co.), and 10 parts of a chopped glass fiber having an average fiber diameter of 6 um and a cut length of 6 mm (EC-6-6-SP, manufactured by Unifrax Co.) were disintegrated using acidic water having a pH of 3.0 to obtain a raw material slurry. Subsequently, the raw material slurry was subjected to papermaking to obtain a wet-laid nonwoven fabric. Further, an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.) and water was provided by impregnation into the wet-laid nonwoven fabric, which was subsequently dried with a rotary dryer at 130°C to obtain a filter medium for an air filter having a basis weight of 70 g/m². The content of the impregnation component in the filter medium was 2.5%.

<Example 2>

A filter medium for an air filter having a basis weight of 70 g/m² was obtained in the same manner as in Example 1 except that an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 25 parts of a cationic surfactant (CATIOGEN TMP, manufactured by DKS Co., Ltd.), and water was used. The content of the impregnation component in the filter medium was 1.7%.

<Example 3>

A filter medium for an air filter having a basis weight of 70 g/m² was obtained in the same manner as in Example 1 except that a slurry obtained by disintegrating 42 parts of a glass wool fiber having an average fiber diameter of 0.65 um (B-06-F, manufactured by Unifrax Co.), 5 parts of a glass wool fiber having an average fiber diameter of 2.44 um (B-26-R, manufactured by Unifrax Co.), 5 parts of a chopped glass fiber having an average fiber diameter of 6 um and a cut length of 6 mm (EC-6-6-SP, manufactured by Unifrax Co.), 30 parts of an all-melting binder fiber (Melty 4000, manufactured by UNITIKA LTD.), and 18 parts of a core-sheath binder fiber (TJ04CN, manufactured by TEIJIN LIMITED) was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.) and water was used. The content of the impregnation component in the filter medium was 1.3%.

<Example 4>

A filter medium for an air filter having a basis weight of 70 g/m² was obtained in the same manner as in Example 1 except that a slurry obtained by disintegrating the fibers described in Example 3 was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 25 parts of a cationic surfactant (CATIOGEN TMP, manufactured by Meisei Chemical Works, Ltd.), and water was used. The content of the impregnation component in the filter medium was 0.6%.

<Example 5>

A filter medium for an air filter having a basis weight of 70 g/m$^2$ was obtained in the same manner as in Example 1 except that a slurry obtained by disintegrating 42 parts of a glass wool fiber having an average fiber diameter of 0.65 um (B-06-F, manufactured by Unifrax Co.), 35 parts of a glass wool fiber having an average fiber diameter of 2.44 um (B-26-R, manufactured by Unifrax Co.), 5 parts of a chopped glass fiber having an average fiber diameter of 6 um and a cut length of 6 mm (EC-6-6-SP, manufactured by Unifrax Co.), and 18 parts of a core-sheath binder fiber (TJ04CN, manufactured by TEIJIN LIMITED) was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 25 parts of a cationic surfactant (CATIOGEN TMP, manufactured by Meisei Chemical Works, Ltd.), and water was used. The content of the impregnation component in the filter medium was 1.3%.

<Example 6>

A filter medium for an air filter having a basis weight of 70 g/m$^2$ was obtained in the same manner as in Example 1 except that a slurry obtained by disintegrating 22 parts of a glass wool fiber having an average fiber diameter of 0.33 um (B-00-F, manufactured by Unifrax Co.), 5 parts of a glass wool fiber having an average fiber diameter of 2.44 um (B-26-R, manufactured by Unifrax Co.), 5 parts of a chopped glass fiber having an average fiber diameter of 6 um and a cut length of 6 mm (EC-6-6-SP, manufactured by Unifrax Co.), 50 parts of an all-melting binder fiber (Melty 4000, manufactured by UNITIKA LTD.), and 18 parts of a core-sheath binder fiber (TJ04CN, manufactured by TEIJIN LIMITED) was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 25 parts of a cationic surfactant (CATIOGEN TMP, manufactured by Meisei Chemical Industry Co., Ltd.), and water was used. The content of the impregnation component in the filter medium was 0.6%.

<Example 7>

A filter medium for an air filter having a basis weight of 70 g/m$^2$ was obtained in the same manner as in Example 1 except that a slurry obtained by disintegrating the fibers described in Example 3 was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 5 parts of a cationic surfactant (CATIOGEN TMP, manufactured by Meisei Chemical Works, Ltd.), and water was used. The content of the impregnation component in the filter medium was 1.1%.

<Example 8>

A filter medium for an air filter having a basis weight of 70 g/m$^2$ was obtained in the same manner as in Example 1 except that a slurry obtained by disintegrating the fibers described in Example 3 was used, and an impregnation liquid prepared by mixing 100 parts of a cationic acrylic water repellent containing, as a main component, a hydrocarbon-based polymer free of fluorine and silicon in a molecule thereof (Unidyne XF-4001, manufactured by Daikin Industries, Ltd.), 67 parts of a cationic surfactant (CATIOGEN TMP, manufactured by Meisei Chemical Works, Ltd.), and water was used. The content of the impregnation component in the filter medium was 0.5%.

<Example 9>

An olefin-based spunbond nonwoven fabric having a basis weight of 20 g/m$^2$ (ELEVES T0203WDO, manufactured by UNITIKA LTD.) as a reinforcing material was bonded to the filter medium for an air filter obtained in Example 2 by thermal pressure.

<Comparative Example 1>

A filter medium for an air filter having a basis weight of 70 g/m$^2$ was obtained in the same manner as in Example 1 except that the impregnation step was omitted.

<Comparative Example 2>

A filter medium for an air filter having a basis weight of 70 g/m$^2$ was obtained in the same manner as in Example 1 except that an impregnation liquid prepared by mixing 100 parts of an acrylic binder resin (VONCOAT AN-1190S, manufactured by DIC Corporation), 20 parts of a cationic acrylic water repellent containing, as a main component, a hydrocarbon-based polymer free of fluorine and silicon in a molecule thereof (Unidyne XF-4001, manufactured by Daikin Industries, Ltd.), and water was used. The content of the impregnation component in the filter medium was 5.1%.

<Comparative Example 3>

A filter medium for an air filter having a basis weight of 70 g/m$^2$ was obtained in the same manner as in Example 1 except that an impregnation liquid prepared by mixing 100 parts of a fluorine-based water repellent (AsahiGuard AG-E060, manufactured by AGC Inc.) and water was used. The content of the impregnation component in the filter medium was 1.2%.

<Comparative Example 4>

A filter medium for an air filter having a basis weight of 70 g/m$^2$ was obtained in the same manner as in Example 1 except that a slurry obtained by disintegrating the fibers described in Example 3 was used and the impregnation step was omitted.

<Comparative Example 5>

A filter medium for an air filter having a basis weight of 70 g/m$^2$ was obtained in the same manner as in Example 1 except that a slurry obtained by disintegrating the fibers described in Example 3 was used, and an impregnation liquid obtained by mixing 100 parts of an acrylic binder resin (VONCOAT AN-1190S, manufactured by DIC Corporation), 20 parts of a cationic acrylic water repellent containing, as a main component, a hydrocarbon-based polymer free of fluorine and silicon in a molecule thereof (Unidyne XF-4001, manufactured by Daikin Industries, Ltd.), and water was used. The content of the impregnation component in the filter medium was 5.0%.

<Comparative Example 6>

A filter medium for an air filter having a basis weight of 70 g/m$^2$ was obtained in the same manner as in Example 1 except that a slurry obtained by disintegrating the fibers described in Example 3 was used, and an impregnation liquid prepared by mixing 100 parts of a fluorine-based water repellent (AsahiGuard AG-E060, manufactured by AGC Inc.) and water was used. The content of the impregnation component in the filter medium was 0.8%.
Evaluation of the filter media for an air filter obtained in examples and comparative examples was performed using the following methods.

<Pressure loss>

The pressure loss was measured as a differential pressure in ventilating the filter medium for an air filter having an effective area of 100 cm$^2$ at a surface wind speed of 5.3 cm/sec using a manometer (Manostar Gauge WO81, manufactured by Yamamoto Electric Works Co., Ltd.).

<Permeability>

The number of upstream and downstream polydispersed polyalphaolefin (PAO) particles in ventilating the filter medium for an air filter having an effective area of 100 cm$^2$ with air containing PAO particles generated by a Laskin nozzle at a surface wind speed of 5.3 cm/sec was measured using a laser particle counter (KC-22B, manufactured by RION Co., Ltd.), and the permeability was determined from the ratio between the number of upstream particles and the number of downstream particles. The target particle size was set to 0.10 to 0.15 um and 0.30 μm.

<PF value>

The PF value was calculated from the values of the pressure loss and the particle permeability using the formula shown in Mathematical Formula 1. The target particle size was set to 0.10 to 0.15 um and 0.30 μm.

<Tensile strength>

The tensile strength was measured using Autograph AGX-S (manufactured by SHIMADZU CORPORATION) under the conditions of a test width of 1 inch, a test length of 100 mm, and a tensile speed of 15 mm/min. In principle, the maximum point of a stress-strain diagram was defined as the tensile strength, but in Example 9 in which the reinforcing material was bonded, the upper yield point was defined as the tensile strength.

<Water repellency>

The water repellency was measured in accordance with MIL-STD-282.
The results of evaluation of the filter medium for an air filter performed by the above-mentioned methods are shown in Table 1 and Table 2.

[Table 1]

| | | Example 1 | Example 2 | Example 3 | Example 4 | Example 5 | Example 6 | Example 7 | Example 8 | Example 9 |
|---|---|---|---|---|---|---|---|---|---|---|
| Glass fiber | [Parts] | 100 | 100 | 52 | 52 | 82 | 32 | 52 | 52 | 100 |
| Core-sheath binder fiber | [Parts] | — | — | 18 | 18 | 18 | 18 | 18 | 18 | — |
| All-melting binder fiber | [Parts] | — | — | 30 | 30 | — | 50 | 30 | 30 | — |
| Water repellent | | Acrylic | Acrylic | Acrylic | Acrylic | Acrylic | Acrylic | Acrylic | Acrylic | Acrylic |
| Surfactant | | — | Cationic | — | Cationic | Cationic | Cationic | Cationic | Cationic | Cationic |
| Water repellent/Surfactant | [Parts] | 100/0 | 100/25 | 100/0 | 100/25 | 100/25 | 100/25 | 100/5 | 100/67 | 100/25 |
| Content of impregnation component | [%] | 2.5 | 1.7 | 1.3 | 0.6 | 1.3 | 0.6 | 1.1 | 0.5 | 1.7 |
| With or without bonding of reinforcing material | | Without | Without | Without | Without | Without | Without | Without | Without | With |
| Pressure loss | [Pa] | 226 | 225 | 167 | 168 | 170 | 164 | 167 | 161 | 234 |
| Permeability regarding 0.10 to 0.15 μm | [%] | 0.1683 | 0.1038 | 1.5115 | 0.9317 | 0.6562 | 1.2831 | 1.3126 | 0.8967 | 0.1530 |
| PF value regarding 0.10 to 0.15 μm | [-] | 12.04 | 13.01 | 10.69 | 11.86 | 12.60 | 11.32 | 11.05 | 12.47 | 11.80 |
| Permeability regarding 0.30 μm | [%] | 0.0160 | 0.0090 | 0.3446 | 0.1931 | 0.1165 | 0.3247 | 0.2941 | 0.1896 | 0.0151 |
| PF value regarding 0.30 μm | [-] | 16.48 | 17.64 | 14.47 | 15.85 | 16.93 | 14.89 | 14.87 | 16.59 | 16.02 |
| Water repellency | [mm water column height] | 1300 | 720 | 1020 | 570 | 1140 | 440 | 920 | 120 | 720 |
| Tensile strength | [kN/m] | 0.14 | 0.10 | 0.48 | 0.41 | 0.26 | 0.96 | 0.45 | 0.34 | 0.45 |

[Table 2]

| | | Comparative Example 1 | Comparative Example 2 | Comparative Example 3 | Comparative Example 4 | Comparative Example 5 | Comparative Example 6 |
|---|---|---|---|---|---|---|---|
| Glass fiber | [Parts] | 100 | 100 | 100 | 52 | 52 | 52 |
| Core-sheath binder fiber | [Parts] | – | – | – | 18 | 18 | 18 |
| All-melting binder fiber | [Parts] | – | – | – | 30 | 30 | 30 |
| Binder resin | | – | Acrylic | – | – | Acrylic | – |
| Water repellent | | – | Acrylic | Fluorine-based | – | Acrylic | Fluorine-based |
| Surfactant | [Parts] | – | – | – | – | – | – |
| Binder resin/Water repellent/Surfactant | [%] | 0/0/0 | 100/20/0 | 0/100/0 | 0/0/0 | 100/20/0 | 0/100/0 |
| Content of impregnation component | [%] | 0.0 | 5.1 | 1.2 | 0.0 | 5.0 | 0.8 |
| Pressure loss | [Pa] | 244 | 262 | 241 | 200 | 223 | 191 |
| Permeability regarding 0.10 to 0.15 μm | [%] | 0.1912 | 0.1452 | 0.1516 | 1.1627 | 0.8720 | 1.1346 |
| PF value regarding 0.10 to 0.15 μm | [–] | 10.93 | 10.63 | 11.48 | 9.49 | 9.06 | 9.99 |
| Permeability regarding 0.30 μm | [%] | 0.0210 | 0.0112 | 0.0162 | 0.1856 | 0.1028 | 0.1468 |
| PF value regarding 0.30 μm | [–] | 14.79 | 14.79 | 15.43 | 13.40 | 13.14 | 14.55 |
| Water repellency | [mm water column height] | 0 | 290 | 1300 | 0 | 180 | 1160 |
| Tensile strength | [kN/m] | 0.13 | 0.85 | 0.20 | 0.65 | 1.34 | 0.47 |

In Comparative Example 1 and Comparative Example 4, since a water repellent was not added to the wet-laid nonwoven fabric, the wet-laid nonwoven fabric had no water repellency. Comparing Example 1 and Comparative Example 1, high water repellency was obtained, and also the PF value was improved in Example 1. Comparing Example 3 and Comparative Example 4, high water repellency was obtained, and also the PF value was improved in Example 3.

Comparing Example 1 and Comparative Example 2, it was verified that the filter medium for an air filter of Example 1, obtained by impregnation with the aqueous dispersion that contains the water repellent free of fluorine and silicon and that does not contain a binder resin, has a higher PF value and higher water repellency than the filter medium for an air filter obtained by adhering the binder resin of Comparative Example 2.

In Example 2 as against Example 1, it was verified that by adding the surfactant to the aqueous dispersion in addition to the water repellent free of fluorine and silicon, a higher PF value is obtained in spite of reduction of the water repellency.

Comparing Example 1 and Example 2 with Comparative Example 3, it was verified that in Example 1 and Example 2, a filter medium, obtained by using the water repellent free of fluorine and silicon according to the present invention, had a physical property balance, between the PF value and the water repellency, equivalent to or better than that of using the fluorine-based water repellent of Comparative Example 3.

It was verified that in Example 3 and Example 4, the PF value decreased as compared with Example 1 and Example 2 because the binder fiber was added to the fiber slurry, but the strength of the filter medium for an air filter increased.

Comparing Example 3 and Example 4 with Comparative Example 5, it was verified that the filter media for an air filter, obtained by impregnation with the aqueous dispersion that contains the water repellent free of fluorine and silicon and that does not contain a binder resin of Example 3 and Example 4, have a higher PF value and higher water repellency than the filter medium for an air filter obtained by adhering the binder resin of Comparative Example 5 in the same manner as the fiber slurry systems in which a binder fiber was not added of Example 1 and Example 2.

Comparing Example 3, Example 4, Example 7, and Example 8 with Comparative Example 6, it was verified that the filter media for an air filter obtained using the water repellent free of fluorine and silicon of Example 3, Example 4, Example 7, and Example 8 are filter media having a physical property balance, among the PF value, the water repellency, and the strength, equivalent to or better than that of the filter medium for an air filter obtained using the fluorine-based water repellent of Comparative Example 6 in the same manner as the fiber slurry systems in which a binder fiber was not added of Example 1 and Example 2.

Comparing Example 2, Example 4, Example 5, and Example 6, by increasing the addition amount of the binder fiber, the PF value and the water repellency are decreased, but the strength is improved, and therefore, the physical property balance of the filter medium for an air filter can be adjusted by changing the addition amount of the binder fiber.

Comparing Example 2 and Example 9, the PF value was decreased by performing bonding, but the strength was improved. In addition, comparing Example 4 and Example 9, the PF value and the strength value were comparable between the case where 48 parts of the binder fiber was added and the case where a binder fiber was unincorporated and the bonding process was performed, and thus selection can be performed depending on the intended use.

## Claims

1. A filter medium for an air filter composed of a wet-laid nonwoven fabric containing a glass fiber having a fiber diameter of less than 1 um, wherein
the wet-laid nonwoven fabric contains a water repellent containing, as a main component, a hydrocarbon-based polymer free of fluorine and silicon in a molecule thereof, and does not contain a binder resin.

2. The filter medium for an air filter according to claim 1, wherein the wet-laid nonwoven fabric further contains a binder fiber.

3. The filter medium for an air filter according to claim 2, wherein a blending ratio of the binder fiber is 10 to 70% by mass with respect to a total fiber mass of the fibers in the filter medium.

4. The filter medium for an air filter according to claim 2, wherein the wet-laid nonwoven fabric is reinforced with a reinforcing material.

5. The filter medium for an air filter according to claim 1, wherein the wet-laid nonwoven fabric does not contain a binder fiber, and the wet-laid nonwoven fabric is reinforced with a reinforcing material.

6. The filter medium for an air filter according to claim 1, wherein

the wet-laid nonwoven fabric contains a glass wool fiber having an average fiber diameter of less than 1 um and a glass wool fiber having an average fiber diameter of 1 um or more, and
a blending ratio of the glass wool fiber having the average fiber diameter of less than 1 um is higher than a blending ratio of the glass wool fiber having the average fiber diameter of 1 um or more.

7. The filter medium for an air filter according to claim 1, wherein the hydrocarbon-based polymer is an acrylic polymer.

8. The filter medium for an air filter according to any one of claims 1 to 7, wherein the wet-laid nonwoven fabric further contains a surfactant.

9. The filter medium for an air filter according to claim 8, wherein a solid mass ratio between the water repellent and the surfactant (water repellent/surfactant) is 2 to 70 parts by mass with respect to 100 parts by mass of the water repellent.

10. A method for producing a filter medium for an air filter, comprising:

a step of forming a sheet in a wet state by forming a slurry containing a glass fiber having a fiber diameter of less than 1 um into the sheet by a wet papermaking method;
a step of impregnating the sheet in a wet state with an aqueous dispersion that contains a water repellent containing, as a main component, a hydrocarbon-based polymer free of fluorine and silicon in a molecule thereof and that does not contain a binder resin; and
a step of obtaining a dry sheet by drying the sheet in a wet state impregnated with the aqueous dispersion.

11. The method for producing a filter medium for an air filter according to claim 10, wherein the slurry further contains a binder fiber.

12. The method for producing a filter medium for an air filter according to claim 10, wherein the hydrocarbon-based polymer is an acrylic polymer.

13. The method for producing a filter medium for an air filter according to any one of claims 10 to 12, wherein the aqueous dispersion further contains a surfactant.

## INTERNATIONAL SEARCH REPORT

| International application No. |
|---|
| **PCT/JP2022/033211** |

**A. CLASSIFICATION OF SUBJECT MATTER**

*B01D 39/20*(2006.01)i; *B01D 46/10*(2006.01)i; *D06M 13/02*(2006.01)i
FI: B01D39/20 B; B01D46/10 Z; D06M13/02

According to International Patent Classification (IPC) or to both national classification and IPC

**B. FIELDS SEARCHED**

Minimum documentation searched (classification system followed by classification symbols)

B01D39/00-41/04,46/00-46/90; D06M13/00-15/715; F24F7/013-7/02,7/04-7/06,7/08,7/10,8/00-8/99,9/00,12/00,

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2004-154672 A (HOKUETSU PAPER MILLS LTD.) 03 June 2004 (2004-06-03) paragraphs [0029]-[0032], [0052] | 1, 6, 8-10, 13 |
| Y | | 2-5, 11 |
| A | | 7, 12 |
| Y | JP 2018-038983 A (HOKUETSU KISHU PAPER CO., LTD.) 15 March 2018 (2018-03-15) paragraphs [0011], [0037] | 2-5, 11 |
| A | | 7, 12 |
| Y | JP 2008-518772 A (DONALDSON CO., INC.) 05 June 2008 (2008-06-05) claim 1, paragraph [0001] | 2-5, 11 |
| A | | 7, 12 |
| P, A | JP 7055261 B1 (HOKUETSU CORP.) 15 April 2022 (2022-04-15) entire text | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 November 2022** | **15 November 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
**Information on patent family members**

International application No.

**PCT/JP2022/033211**

| Patent document cited in search report | | | Publication date (day/month/year) | Patent family member(s) | Publication date (day/month/year) |
|---|---|---|---|---|---|
| JP | 2004-154672 | A | 03 June 2004 | (Family: none) | |
| JP | 2018-038983 | A | 15 March 2018 | (Family: none) | |
| JP | 2008-518772 | A | 05 June 2008 | US      2006/0096263      A1<br>claim 1, paragraph [0002]<br>WO      2006/052732      A2<br>CA           2586636      A1<br>KR  10-2007-0085812      A<br>CN           101098741      A<br>EP           1938883      A1 | |
| JP | 7055261 | B1 | 15 April 2022 | (Family: none) | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2175997 A
- JP H9225226 A
- WO 9704851 A
- WO 02016005 A
- JP 2008518772 A
- JP 2018038983 A